# DEMANDE DE BREVET EUROPEEN

(11) **EP 2 213 627 A1**
(43) Date de publication de la demande: **04.08.2010**
(21) Numéro de dépôt: 10001027.1
(22) Date de dépôt: 29.01.2010
(51) Int. Cl.: C02F 3/04, C02F 3/34, C02F 3/20

(54) **Système et procède de traitement des eaux usées**

(30) Priorité: 30.01.2009 FR 0950615
(71) Demandeur: Michel de Tretaigne, Nicolas, 13650 Meyrargues (FR); Janobet, Jean-Claude, 04100 Manosque (FR)
(72) Inventeur: Michel de Tretaigne, Nicolas, 13650 Meyrargues (FR); Janobet, Jean-Claude, 04100 Manosque (FR)
(74) Mandataire: Roman, Alexis

(57) **Abrégé**

L'invention concerne un système de traitement des eaux usées comprenant :
- un réacteur principal (1) contenant la matière d'un lit filtrant (2) granulaire, ladite matière étant fixe et reposant sur un bac de récupération (3) des eaux traitées,
- un dispositif (4) pour injecter les eaux usées disposé dans le réacteur principal (1), au-dessus du lit filtrant (2),
- un dispositif (7) pour injecter du gaz oxygéné ou de l'air dans le lit filtrant,
se caractérisant par le fait que :
- ledit système comprend un réacteur primaire (5) configuré pour assurer le stockage préalable temporaire des eaux usées à traiter avant leur injection régulière dans le lit filtrant (2), ledit réacteur primaire contenant un lit enzymatique (50), les eaux usées transitant par ledit réacteur primaire avant d'être injectées dans le réacteur principal (1),
- le dispositif (4) pour injecter les eaux usées comprend des buses (40) aménagées au-dessus du lit filtrant (2) et disposées de manière à assurer une répartition uniforme des eaux usées dans ledit lit filtrant, ledit dispositif d'injection étant configuré pour injecter les eaux usées de manière discontinue dans ledit lit filtrant,
- le dispositif (7) pour injecter le gaz oxygéné ou l'air est disposé dans la partie inférieure du lit filtrant (2), au coeur de celui-ci, ledit dispositif d'injection étant configuré pour injecter le gaz oxygéné ou l'air de manière discontinue.

## Description

### Domaine technique de l'invention.

L'invention a pour objet un système et un procédé de traitement des eaux usées.

Elle concerne le domaine technique du traitement des eaux usées, en vue de leur épuration par voie biologique et plus particulièrement les techniques d'épuration biologique où un courant descendant d'eaux usées traverse un lit filtrant granulaire fixe.

L'invention s'applique particulièrement bien au traitement des eaux usées domestiques provenant d'une population de quelques habitants à quelques centaines d'habitants ainsi que les eaux usées provenant du domaine agro-alimentaire et/ou agro-industriel.

### État de la technique.

Il est courant de traiter des eaux usées (eaux résiduaires provenant de fosses septiques, eaux d'égouts, agro-alimentaire, agro-industriel, ...) dans le but, en particulier, de permettre leur rejet dans le milieu naturel sans atteinte à la qualité des eaux et de l'environnement.

Les techniques d'épuration biologique où un courant descendant d'eaux usées traverse un lit filtrant granulaire fixe sont bien connues de l'homme du métier. En général, les éléments polluants contenues dans les eaux usées à traiter sont dégradées par des colonies de bactéries. On connaît des systèmes d'épuration comprenant un réacteur contenant la matière d'un lit filtrant granulaire, ladite matière étant fixe et reposant sur un bac de récupération des eaux traitées. Un dispositif pour injecter les eaux usées est disposé dans la cuve principale, au-dessus du lit filtrant, de manière à ce qu'un courant descendant d'eaux usées traverse ledit lit filtrant, vers le bac de récupération. Mais, dans la plupart des cas, la répartition des eaux usées au sein du lit filtrant n'est pas homogène et se fait sous forme de chemins d'écoulement préférentiels, et l'aération dudit lit n'est pas efficace.

Les documents FR 2.358.362 (VERDE) et FR 2.604.990 (OTV) divulguent plus particulièrement des systèmes de traitement à lit granulaire immergé dans lesquels de l'air d'oxygénation est injecté, à un niveau intermédiaire du réacteur de façon à obtenir une zone aérobie au-dessus de ce niveau intermédiaire et une zone anaérobie au-dessous de ce niveau intermédiaire. Avec ces systèmes de traitement, les DBO et MES présents dans les eaux usées à traiter sont éliminés à environ 90 %.

On connait également par le document FR 2.644.773 (BURGEAP), un système d'épuration d'eaux polluées comprenant :
- un réacteur principal contenant une couche filtrante en sable reposant sur une couche de base drainante,
- un dispositif pour injecter les eaux usées disposé dans le réacteur principal, au-dessus de la couche filtrante, de façon à pouvoir régler le débit d'alimentation pour éviter ou limiter considérablement les périodes de submersion de la couche filtrante en sable,
- un dispositif pour injecter de l'air disposé dans les drains de la couche de base drainante.

Tel que le système d'épuration de ce document est conçu, lorsque le flux d'air est injecté dans les drains, deux chemins s'offrent à lui : le premier consiste à sortir des drains et pénétrer dans la couche filtrante en sable. Le second consiste à sortir des drains directement par un réservoir externe. Etant donné que le second chemin présente moins de résistance (moins de perte de charge), l'air va évidemment sortir par le réservoir externe de sorte que la couche filtrante n'est absolument pas aéré, l'efficacité du traitement paraissant de fait douteuse.

La présente invention a pour principal objectif de proposer un système et un procédé de traitement dont les performances de filtration sont améliorées par rapport aux systèmes et procédés de traitement à lit granulaire fixe connus de l'art antérieur.

Un autre objectif de l'invention est de proposer un système de traitement de conception simple, d'encombrement réduit, facile à installer et éventuellement totalement autonome en énergie.

### Divulgation de l'invention.

La solution proposée par l'invention est un système de traitement des eaux usées comprenant un réacteur principal contenant la matière d'un lit filtrant granulaire, ladite matière étant fixe et reposant sur un bac de récupération des eaux traitées, un dispositif pour injecter les eaux usées disposé dans le réacteur principal, au-dessus du lit filtrant, de manière à ce qu'un courant descendant d'eaux usées traverse ledit lit filtrant, vers le bac de récupération, et un dispositif pour injecter du gaz oxygéné ou de l'air dans le lit filtrant. Ce système de traitement est remarquable en ce que :
- le système comprend un réacteur primaire configuré pour assurer le stockage préalable temporaire des eaux usées à traiter avant leur injection régulière dans le lit filtrant tout au long d'une journée de 24 heures, ledit réacteur primaire contenant un lit enzymatique permettant d'accélérer et de favoriser le développement de la masse bactérienne contenue dans les eaux usées, ces dernières transitant par ledit réacteur primaire de manière à être enrichies en bactéries avant d'être injectées dans le réacteur principal,
- le dispositif pour injecter les eaux usées comprend des buses aménagées au-dessus du lit filtrant et disposées de manière à assurer une répartition uniforme des eaux usées dans ledit lit filtrant, ledit dispositif d'injection étant configuré pour injecter les eaux usées de manière discontinue dans ledit lit filtrant,
- le dispositif pour injecter le gaz oxygéné ou l'air est disposé dans la partie inférieure du lit filtrant, au coeur de celui-ci, de manière à ce que tout ledit lit filtrant soit en phase aérobie et que les eaux usées soient aérées tout au long de leur trajet au sein de celui-ci, ledit dispositif d'injection étant configuré pour injecter le gaz oxygéné ou l'air de manière discontinue.

L'enrichissement préalable des eaux usées en bactéries permet d'augmenter la rapidité de dégradation des éléments polluants à traiter. En outre, l'injection homogène et discontinue des eaux usées dans le lit filtrant permet d'améliorer leur répartition dans le temps dans ledit lit filtrant et donc d'optimiser leur traitement. Enfin, le fait que sensiblement tout le volume du lit granulaire soit en phase aérobie, permet d'augmenter le développement bactérien et donc d'augmenter l'efficacité du traitement. Les demandeurs ont constaté que l'ensemble de ces caractéristiques techniques agissait en synergie pour procurer des performances de traitement optimales, supérieures à celles que l'on peut obtenir avec des systèmes de lits granulaires traditionnels.

Le gaz oxygéné ou l'air est avantageusement injecté en même temps que les eaux usées de manière à ce que ces dernières soient traitées au mieux par les bactéries.

Le système de traitement comporte avantageusement un réacteur primaire contenant un lit enzymatique permettant d'accélérer et de favoriser le développement de la masse bactérienne contenue dans les eaux usées, ces dernières transitant par ledit réacteur primaire de manière à être enrichies en bactéries avant d'être injectées dans le réacteur principal au moyen d'une pompe qui peut être autonome en énergie. Ce réacteur primaire peut être solidaire ou indépendant du réacteur principal. Le réacteur primaire est avantageusement configuré pour assurer le stockage préalable temporaire des eaux usées à traiter avant leur injection régulière dans le lit filtrant tout au long d'une journée de 24 heures.

Le dispositif pour injecter le gaz oxygéné ou l'air comprend préférentiellement des buses d'injection au coeur du lit filtrant, lesdites buses étant reliées à une pompe à air. Afin de diminuer la consommation énergétique du système de traitement et également le rendre autonome, cette pompe à air peut être couplée à un ensemble de cellules photovoltaïques assurant son alimentation électrique.

Préférentiellement, le matériau granulaire du lit filtrant est constitué par un gravier dont la granulométrie est comprise entre 5 mm et 20 mm, préférentiellement entre 15 mm et 20 mm. Dans une variante de réalisation, le matériau granulaire du lit filtrant peut être constitué par un sable siliceux non calcaire de granulométrie comprise entre 50 µm et 5 mm, préférentiellement entre 2 mm et 5 mm, ou par tout matériau granulaire de même caractéristique.

Un autre aspect de l'invention concerne un procédé pour traiter des eaux usées consistant à injecter les eaux usées dans un lit filtrant granulaire fixe, l'injection étant réalisée au-dessus dudit lit filtrant de manière à ce qu'un courant descendant d'eaux usées traverse ledit lit filtrant, vers un bac de récupération, et dans lequel on injecte du gaz oxygéné ou de l'air dans le lit filtrant, et dans lequel :
- on enrichit les eaux usées en bactéries avant de les injecter dans le lit filtrant,
- on injecte lesdites eaux usées de manière à en assurer une répartition uniforme dans le lit filtrant, les eaux usées étant injectées de manière discontinue dans ledit lit filtrant,
- on injecte le gaz oxygéné ou l'air dans la partie inférieure du lit filtrant, au coeur de celui-ci, de manière à ce que tout ledit lit filtrant soit en phase aérobie et que les eaux usées soient aérées tout au long de leur trajet au sein de celui-ci, le gaz oxygéné ou l'air étant injecté de manière discontinue dans ledit lit filtrant.

Préférentiellement, on injecte de manière discontinue les eaux usées dans le lit filtrant, par lame d'eau de quelques centimètres.

Préférentiellement encore, on injecte de manière discontinue le gaz oxygéné ou l'air dans le lit filtrant, par exemple par volume d'environ 150 L à 200 L, et de manière générale, par séquences adaptées aux besoins du système.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue schématique en coupe du système de traitement conforme à l'invention,
- la figure 2 est une vue schématique en coupe selon A-A du système de traitement de la figure 1,
- la figure 3 schématise la fixation des bactéries sur un grain du lit filtrant ainsi que le trajet des eaux usées ruisselant sur ce grain.

### Modes de réalisation de l'invention.

Le système et le procédé de traitement objets de l'invention permettent d'épurer des eaux usées par voie biologique, en leur faisant traverser un lit filtrant granulaire fixe. L'objectif est de traiter efficacement des eaux usées domestiques provenant d'une population de quelques habitants (par exemple provenant d'une villa) à quelques centaines d'habitants (par exemple provenant d'un quartier) et/ou les eaux usées provenant du domaine agro-alimentaire et/ou agro-industriel. Le système de traitement objet de l'invention est destiné à remplacer les systèmes de traitement existants et/ou est destiné à équiper de nouvelles installations ou habitations.

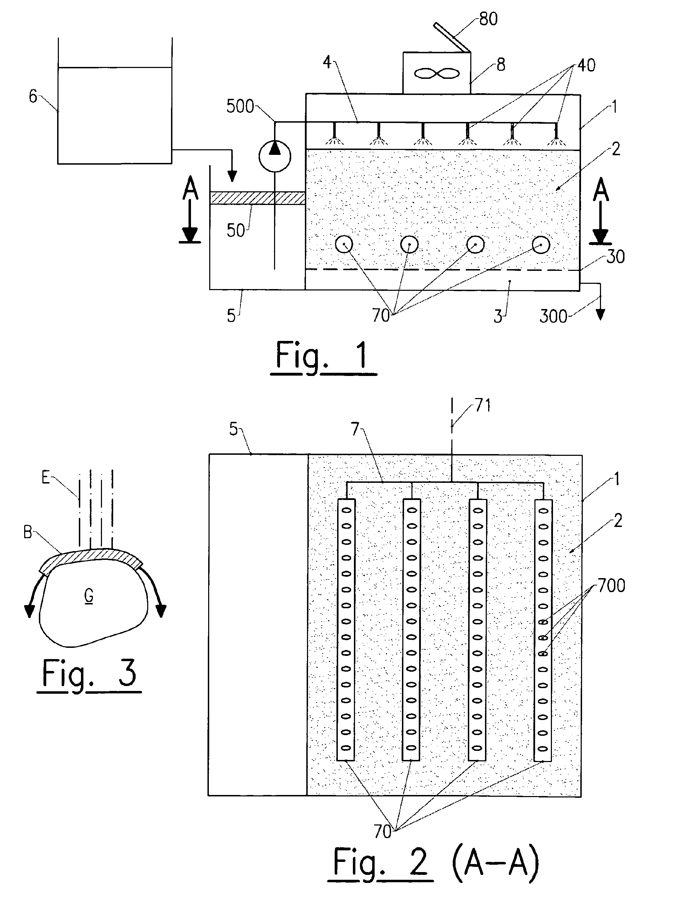

En se rapportant à la figure 1, le système de traitement objet de l'invention comprend un réacteur principal 1 contenant la matière d'un lit filtrant granulaire 2. Le réacteur principal 1 consiste préférentiellement en une cuve parallélépipédique étanche métallique ou plastique d'environ 2 m de long, 1 m de large et 1 m de haut. Une forme cylindrique, cubique ou autre, avec un volume plus ou moins important, pourrait être envisagée de manière similaire. Cette cuve est avantageusement pourvue d'un couvercle amovible permettant d'avoir accès à l'intérieur du réacteur principal 1. Ce dernier est destiné à être enterré ou être hors-sol ou disposé dans un local technique spécifique.

Le matériau granulaire du lit filtrant 2 peut être constitué par un sable siliceux non calcaire de granulométrie comprise entre 50 µm et 5 mm, préférentiellement entre 2 mm et 5 mm, ou par tout matériau granulaire de mêmes caractéristiques. Un sable siliceux non calcaire présente l'avantage de rester stable à l'eau, c'est-à-dire qu'il ne se compacte pas, ou peu, lors de l'écoulement des eaux usées. En pratique, on préfère utiliser un gravier dont la granulométrie est comprise entre 5 mm et 20 mm, préférentiellement entre 15 mm et 20 mm. Cette granulométrie volontairement grossière permet non seulement d'éviter les colmatages en donnant une perméabilité « en grand », c'est-à-dire presque infinie, mais encore d'assurer une aération beaucoup plus aisée des substrats. Toutefois, l'homme du métier peut utiliser d'autres matériaux granulaires ainsi que d'autres granulométries, en fonction des caractéristiques des eaux usées à traiter. L'épaisseur du lit filtrant 2 est d'environ 60 cm pour un réacteur principal 1 du type décrit au paragraphe précédent.

Tel que représenté sur la figure 1, le réacteur principal 1 intègre dans sa partie inférieure un bac de récupération 3 des eaux traitées. Ce bac de récupération 3 est séparé du lit filtrant 2 par une grille perforée 30, ou un caillebotis. Il a, par exemple, une hauteur d'environ 20 cm, sa longueur et sa largeur étant celles du réacteur principal 1. Conformément à l'invention, la matière du lit filtrant 2 est fixe dans le réacteur principal 1 et repose sur le bac de récupération 3 (i.e. sur la grille perforée 30, ou le caillebotis). Une conduite de sortie 300 permet de récupérer les eaux traitées contenues dans le bac de récupération 3. La réutilisation de l'eau est essentiellement utilisée pour l'irrigation ou pour des utilisations qui ne nécessitent pas d'eau potable (usages industriels et/ou domestiques et/ou ré-alimentation des nappes phréatiques).

Le réacteur principal 1 est équipé d'un dispositif 4 pour injecter les eaux usées. Ce dispositif d'injection 4 est situé au-dessus du lit filtrant 2, de manière à ce qu'un courant descendant d'eaux usées traverse ledit lit filtrant, vers le bac de récupération 3. En pratique, le dispositif d'injection 4 des eaux usées comprend des buses 40 aménagées au-dessus du lit filtrant 2 et disposées de manière à assurer une répartition uniforme desdites eaux usées dans ledit lit filtrant, ledit dispositif d'injection étant configuré pour injecter les eaux usées de manière discontinue dans ledit lit filtrant. Les buses 40 sont du type connu de l'homme du métier. Elles sont réparties de manière uniforme au-dessus de la surface libre du lit filtrant 2. Dans les lits granulaires traditionnels, les eaux usées s'écoulent en continu. Inévitablement, des chemins d'écoulement préférentiels se créent de sorte que certaines zones du lit filtrant ne sont pas mouillées, ce qui, de fait, diminue l'efficacité du traitement. Une injection homogène des eaux usées sur toute la surface du lit permet de remédier à ce problème : aucun cheminement d'écoulement préférentiel ne se crée, les eaux usées imprégnant sensiblement tout le volume du lit filtrant 2. En outre, la production des eaux usées est en pratique essentiellement répartie sur quelques heures de la journée : le matin de 7h à 9h, un peu l'après-midi et le soir entre 19h et 22h. Afin de répartir uniformément les apports d'eaux usées sur les 24 heures d'une journée normale sans avoir à subir les pics de volumes importants correspondant aux heures mentionnées ci-dessus, il est installé en amont du réacteur principal 1 un réacteur primaire 5 de volume suffisant qui est configuré pour assurer le stockage préalable temporaire desdites eaux avant leur injection régulière dans le lit filtrant 2 tout au long de la journée de 24 heures.

En pratique, on injecte de manière discontinue les eaux usées dans le lit filtrant 2, par lame d'eau de quelques centimètres. Les débits d'injection sont adaptés au volume du réacteur principal 1 et aux besoins du système. Au cours d'une journée de 24 h, il peut y avoir dix, douze, quinze, vingt, ..., injections d'eaux usées dans le lit filtrant 2 de façon à ce que chaque injection imprègne correctement, par ruissellement, sensiblement tout ledit lit filtrant et que les eaux usées soient traitées au mieux, lentement, par les bactéries. Cette alimentation par séquences courtes et régulières permet aux eaux usées d'avoir le temps de suinter sur la masse bactérienne épuratrice tout au long de la journée. En effet, du fait de la granulométrie grossière du lit filtrant 2, sans ce séquençage court et régulier, les eaux usées percoleraient immédiatement à la base du filtre sans effet épurateur. Plutôt qu'un cheminement lent d'une masse d'eaux usées à travers un massif filtrant de granulométrie serrée (comme c'est le cas dans les dispositifs de l'art antérieur), on préfère un cheminement séquentiel de grande fréquence mais de faibles volumes unitaires.

Conformément à l'invention, les eaux usées sont enrichies en bactéries avant d'être injectées dans le réacteur principal 1. Pour ce faire, et en se rapportant à la figure 1, on utilise un réacteur primaire 5 (ou cuve de régulation des bâchées) contenant un lit enzymatique 50 permettant de faire face à des carences bactériennes éventuelles. Ces enzymes permettent d'accélérer et de favoriser le développement de la masse bactérienne contenue dans les eaux usées. Il est également envisageable d'ajouter des bactéries spécifiques dans les eaux usées lors de leur passage dans le réservoir primaire 5. Ces bactéries spécifiques ajoutées seront choisies par l'homme du métier en fonction des eaux usées à traiter et du lit filtrant utilisé. En pratique, la population bactérienne contenue dans les eaux usées est constituée de bactéries naturelles, non pathogènes et non opportunes.

Le réacteur primaire 5 est positionné de sorte que les eaux usées transitent par lui avant d'être injectées dans le réacteur principal 1. Le réacteur primaire 5 peut être solidaire - disposé à l'intérieur ou à l'extérieur du réacteur principal 1 - ou indépendant dudit réacteur principal. En principe, le réacteur primaire 5 est étanche et peut être réalisé dans le même matériau que celui du premier réacteur 1. Il a une contenance adaptée aux volumes d'eaux usagées à traiter, par exemple d'environ 200 L. En pratique, les eaux usées proviennent d'une fosse toutes eaux 6, qui est généralement en milieu anaérobie, pour être déversées dans le réacteur primaire 5. Les injections d'eaux usées sont commandées par un système automatisé. On peut par exemple équiper le réacteur primaire 5 d'un capteur de niveau de sorte que la pompe du dispositif de pompage 500 permettant d'amener les eaux usées enrichies en bactéries depuis le réacteur primaire 5 jusque dans le réacteur principal 1, soit activée dès que les eaux usées atteignent un niveau déterminé.

Conformément à l'invention, un dispositif pour injecter du gaz oxygéné ou de l'air est disposé dans le lit filtrant 2. En se rapportant aux figures 1 et 2, ce dispositif d'injection 7 est disposé dans la partie inférieure du lit filtrant 2, au coeur de celui-ci, de manière à ce que tout ledit lit filtrant soit en phase aérobie et que les eaux usées soient aérées tout au long de leur trajet au sein de celui-ci.

Les éléments polluants sont dégradés par les bactéries et transformées en boues qui sont retenues par la matière du lit filtrant 2. Le principe de cette filtration biologique est schématisé sur la figure 3 : les bactéries B se fixent naturellement à la surface des grains G du lit filtrant 2 ; en présence d'oxygène, la population de bactéries croît et est sans cesse renouvelée ; lorsque les eaux usées E ruissellent sur un grain G, elles passent sur la couche bactérienne B de sorte que les éléments polluants soient dégradés. On comprend qu'en répartissant de manière homogène l'écoulement des eaux usées dans le lit filtrant 2, la charge de traitement des couches bactériennes réparties sur les grains du lit filtrant 2, va être optimale : le traitement va être réalisé dans l'ensemble du lit filtrant 2 contrairement aux systèmes de l'art antérieur où ce traitement n'est réalisé que sur une partie seulement dudit lit (à cause des chemins préférentiels d'écoulement).

Le fonctionnement aérobie séquentiel du réacteur principal 1 a pour conséquence un développement bactérien optimal dans tout le lit filtrant 2, ce qui entraîne de fait une dégradation quasi-totale des impuretés telles que DBO, MES azote et coliformes fécaux. Les demandeurs ont constaté que le rendement de traitement de chacun de ces éléments varie entre 95 % et 98 %.

Le dispositif d'injection 7 de gaz oxygéné ou d'air comprend préférentiellement des buses d'injection 70 au coeur du le lit filtrant 2. Ces buses 70 sont orientées vers le haut du lit filtrant de manière à ce que le courant de gaz oxygéné ou d'air soit ascendant, à contre sens du courant descendant des eaux usées. En pratique, ces buses 70 sont réparties de manière homogène dans le lit filtrant 2. Les buses 70 sont pourvues de perforations ou de fentes par lesquelles s'échappe le gaz oxygéné ou l'air.

En pratique, on injecte de manière discontinue le gaz oxygéné ou l'air dans le lit filtrant 2. Le gaz oxygéné ou l'air est avantageusement injecté en même temps que les eaux usées de manière à ce que ces dernières soient traitées au mieux par les bactéries. On peut par exemple injecter le gaz oxygéné ou l'air par volume d'environ 150 L à 200 L. Mais de manière générale, l'injection de gaz oxygéné ou d'air est adaptée au volume de réacteur principal 1 et au besoin du système.

En se rapportant à la figure 1, les buses 70 sont reliées à une pompe à air 8 permettant d'introduire de manière légèrement forcée le gaz oxygéné ou l'air dans le lit filtrant 2. Une conduite 71 relie les buses d'injection 70 à la pompe à air 8. Cette dernière pourra être raccordée au réseau électrique. Toutefois, afin de diminuer la consommation énergétique du système, cette pompe à air 8 ainsi que les autres pompes dudit système, sont avantageusement couplés à un ensemble de cellules photovoltaïques 80 assurant leur alimentation électrique autonome.

## Revendications

1. Système de traitement des eaux usées comprenant :
- un réacteur principal (1) contenant la matière d'un lit filtrant (2) granulaire, ladite matière étant fixe et reposant sur un bac de récupération (3) des eaux traitées,
- un dispositif (4) pour injecter les eaux usées disposé dans le réacteur principal (1), au-dessus du lit filtrant (2), de manière à ce qu'un courant descendant d'eaux usées traverse ledit lit filtrant, vers le bac de récupération (3),
- un dispositif (7) pour injecter du gaz oxygéné ou de l'air dans le lit filtrant, **se caractérisant par le fait que** :
- ledit système comprend un réacteur primaire (5) configuré pour assurer le stockage préalable temporaire des eaux usées à traiter avant leur injection régulière dans le lit filtrant (2) tout au long d'une journée de 24 heures, ledit réacteur primaire contenant un lit enzymatique (50) permettant d'accélérer et de favoriser le développement de la masse bactérienne contenue dans les eaux usées, ces dernières transitant par ledit réacteur primaire de manière à être enrichies en bactéries avant d'être injectées dans le réacteur principal (1).
- le dispositif (4) pour injecter les eaux usées comprend des buses (40) aménagées au-dessus du lit filtrant (2) et disposées de manière à assurer une répartition uniforme des eaux usées dans ledit lit filtrant, ledit dispositif d'injection étant configuré pour injecter les eaux usées de manière discontinue dans ledit lit filtrant,
- le dispositif (7) pour injecter le gaz oxygéné ou l'air est disposé dans la partie inférieure du lit filtrant (2), au coeur de celui-ci, de manière à ce que tout ledit lit filtrant soit en phase aérobie et que les eaux usées soient aérées tout au long de leur trajet au sein de celui-ci, ledit dispositif d'injection étant configuré pour injecter le gaz oxygéné ou l'air de manière discontinue.

2. Système selon l'une des revendications précédentes, dans lequel le gaz oxygéné ou l'air est injecté en même temps que les eaux usées.

3. Système selon l'une des revendications précédentes, dans lequel le réacteur primaire (5) est solidaire ou indépendant du réacteur principal (1).

4. Système selon l'une des revendications précédentes, dans lequel le réacteur primaire (5) est équipé d'un capteur de niveau de sorte que la pompe du dispositif de pompage (500) permettant d'amener les eaux usées enrichies en bactéries depuis ledit réacteur primaire jusque dans le réacteur principal (1), soit activée dès que les eaux usées atteignent un niveau déterminé.

5. Système selon l'une des revendications précédentes, dans lequel le dispositif (7) pour injecter le gaz oxygéné ou l'air comprend des buses d'injection (70) au coeur du lit filtrant (2), lesdites buses étant reliées à une pompe à air (8) couplée à un ensemble de cellules photovoltaïques (80) assurant son alimentation électrique.

6. Système selon l'une des revendications 1 à 5, dans lequel le matériau granulaire du lit filtrant (2) est constitué par un gravier dont la granulométrie est comprise entre 5 mm et 20 mm, préférentiellement entre 15 mm et 20 mm.

7. Système selon l'une des revendications 1 à 5, dans lequel le matériau granulaire du lit filtrant (2) est constitué par un sable siliceux non calcaire de granulométrie comprise entre 50 µm et 5 mm, préférentiellement entre 2 mm et 5mm.

8. Système selon l'une des revendications précédentes, dans lequel le bac de récupération (3) est séparé du lit filtrant (2) par une grille perforée (30), ou un caillebotis.

9. Procédé pour traiter des eaux usées consistant à injecter les eaux usées dans un lit filtrant (2) granulaire fixe, l'injection étant réalisée au-dessus dudit lit filtrant de manière à ce qu'un courant descendant d'eaux usées traverse ledit lit filtrant, vers un bac de récupération (3), et dans lequel on injecte du gaz oxygéné ou de l'air dans le lit filtrant,
**se caractérisant par le fait que** :
- on enrichit les eaux usées en bactéries avant de les injecter dans le lit filtrant (2),
- on injecte lesdites eaux usées de manière à en assurer une répartition uniforme dans le lit filtrant (2), les eaux usées étant injectées de manière discontinue dans ledit lit filtrant,
- on injecte le gaz oxygéné ou l'air dans la partie inférieure du lit filtrant (2), au coeur de celui-ci, de manière à ce que tout ledit lit filtrant soit en phase aérobie et que les eaux usées soient aérées tout au long de leur trajet au sein de celui-ci, le gaz oxygéné ou l'air étant injecté de manière discontinue dans ledit lit filtrant.

10. Procédé selon la revendication 9, dans lequel on injecte de manière discontinue les eaux usées dans le lit filtrant (2), par lame d'eau de quelques centimètres.
